# EUROPEAN PATENT SPECIFICATION

(11) **EP 2 032 993 B1**
(45) Date of publication and mention of the grant of the patent: **07.12.2011**
(21) Application number: 07872527.2
(22) Date of filing: 15.06.2007
(51) Int. Cl.: G01N 35/00

(54) **RADIO FREQUENCY TRANSPONDER ASSAY**
FUNKFREQUENZ-TRANSPONDER-TESTANORDNUNG
DISPOSITIF DE TEST AVEC TRANSPONDEUR RADIOFRÉQUENCE

(30) Priority: 23.06.2006 US 426032
(43) Date of publication of application: 11.03.2009
(73) Proprietor: Becton, Dickinson & Company, Franklin Lakes, NJ 07417-1880 (US)
(72) Inventor: BACHUR, Nicholas, R., Monkton, MD 21111 (US); GOLDENBAUM, Paul, Dayton, NV 89403 (US); ROSENSTEIN, Robert, Ellicott City, MD 21042 (US); HANSON, Timothy, Spring Grove, PA 17362 (US)
(74) Representative: von Kreisler Selting Werner
(86) International application number: PCT/US2007/014022
(87) International publication number: WO 2008/094173

(56) References cited:
- WO-A-03/083905
- WO-A-2005/074161
- WO-A-2006/026741
- US-A1- 2005 009 122
- US-B1- 6 376 187

## Description

### BACKGROUND OF THE INVENTION

Assays of biological samples (e.g. blood or other bodily fluids) are a critical component in the array of patient diagnostic tools available. Assays exhibit a response to the biological sample in which the assay is placed. The assay can be something as basic as a pH sensitive dye that changes color in response to the pH of the sample. The assay can be an immunoassay in which an antibody that is attached to a patch attracts a target analyte which, in turn, attracts and attaches to a second free-floating antibody. The antibody "sandwich" that results emits a signal which can be detected by a suitable sensor. For example, if the sandwich emits a fluorescent signal, that signal can be detected by a sensor for such signals.

A variety of assays are well known. One problem with such assays is that they need to be monitored in order to detect the response. This can be time consuming and labor intensive if people are required to manually observe the response.

In order to avoid this very expensive monitoring solution, systems have been designed to monitor assays automatically to observe and record assay response. One such system is the BACTEC^{™} Instrumented Blood Culture Systems from Becton Dickinson. Such systems provide fully-automated, walk away testing in which samples in blood culture bottles are agitated and incubated while being monitored.

While such devices offer many improvements over other methods for monitoring assay response, they still require instrument stations from which samples need to be removed before other samples can be placed therein and tested. Thus, the instrument stations cannot be completely unattended. Since not every assay takes the same amount of time, it cannot be predicted when the assay will be complete and the sample removed. This uncertainty necessitates frequent monitoring of the apparatus to determine when a current assay is complete and a new assay can be undertaken.

Thus, new methods and apparatus for monitoring assays continue to be sought.

WO 2005/074161 A1 and WO 2006/026741 A1 disclose diagnostic sensor systems employing the RFID technology. Sensed signals are communicated as RFID signals to mobile Communication devices.

Further test devices are disclosed by US 6,376,187 B1 and US 2005/0009122 A1.

### SUMMARY OF THE INVENTION

The subject matter of the invention is defined by independent claim 1.

The present invention, in one embodiment, is a transponder with a sample assay fixed thereon such that the transponder can interrogate the assay and send the results of the interrogation, wirelessly, to a remote receiver. The transponder with the assay thereon is placed in a sample. The assay is configured to exhibit a physical response to a condition in the sample. In one embodiment, the assay changes color in response to a change in the pH of the sample. Upon interrogation of the assay, the transponder receives a signal indicative of assay response to the sample. The transponder then transmits the signal indicative of assay response to the receiver.

In another aspect, the present invention is a system for interrogating an assay placed in a sample. In the system, the assay is fixed on a transponder. The assay is interrogated by directing an energy source, e.g. a light source, onto the assay. If the energy source is external to the container in which the assay is placed, the container and the sample are at least semitransparent to the energy to insure that the energy directed at the assay is received at the assay.

In either embodiment the transponder is configured so that the transponder elements do not come into contact with the sample. The transponder elements include communications elements that permit the transponder to communicate wirelessly (*i.e*. through the air) with other components. Such elements typically include an antenna element and at least one integrated circuit element (referred to as a chip or a transceiver chip hereinafter) that controls the communication. The functions of the integrated circuit chip(s) include, by way of example and not by way of limitation, functions such as the transmission and receipt of wireless communications. As such the chip performs the requisite coding, decoding, modulation, etc. required for wireless communication of data. Integrated circuit chips that function as transceivers (*i.e*. transmitters/receivers) for RF (radio frequency) devices are well known to one skilled in the art and are not described in detail herein.

The chip receives information about the assay, and processes the information for transmission to a remote device. In this regard, many different assays are contemplated for use in the present invention. In fact almost any assay used in the medical diagnostic field, be it biological, biochemical, immunological, nucleic acid, proteomic or genomic can be used in the present invention

The assay can be placed on the transponder using any means suited for the assay itself and the mechanism employed for detecting the result of the assay. For example, the assay can be bonded, imprinted, molded, screened, vapor deposited or otherwise attached to specific sites on the surface.

The transponder or system is equipped to sense or evaluate the assay response to the sample in a variety of ways. The mechanism for evaluation depends largely on the response that the assay exhibits to the sample. For example, if the assay changes color in response to a change in sample pH, then the mechanism for evaluation will communicate the fact of that color change to the integrated circuit, which will transmit that result, through its transmission mechanism, to a remote device. The remote device will be programmed to receive the information and output the information for further use (e.g. diagnosis and/or treatment).

In one example, the transponder is configured to detect a change in the color of the assay that results from a condition in the sample that causes that color change. In these embodiments a light source (e.g. an LED) is directed onto the assay. In one embodiment, this light source is physically integrated in the transponder and the reflection of the light from the assay is monitored to evaluate assay response. In another embodiment, the light source is external to the assay, and the light transmitted through the assay is monitored in order to determine assay response.

In embodiments where the light source is internal to the transponder, the light source is directed onto the assay. Light reflected from the assay is incident on a photodetector. The photodetector emits a signal based on the light incident thereon. The signal indicates the light absorption of the assay at a given wavelength. If the amount of light reflected from the assay at the target wavelength changes by an amount at or above a certain threshold, then the assay has exhibited a positive response to sample. The photodetector transmits an electrical signal to the integrated circuit, which then causes the signal indicating positive assay response to be transmitted from the transponder. In the context of the present invention, a positive assay response is a detectable assay response, which indicates a sample condition that is at or above a certain threshold level or amount. A negative assay response is either no change in the assay or a change in the assay that is less than a threshold level (*e.g.* an undetectable change). A negative assay response indicates a sample condition that is below a certain threshold level or amount.

In these embodiments, the transponder is configured so that that light is not absorbed or reflected by the materials in the light path. Consequently materials that are optically transparent, at least at the target wavelength, are selected for at least those portions of the transponder that are in the path of the light directed from the light source to the assay and back from the assay to the photodetector.

In the embodiments where the light source is external to the assay, the light source (LED) is again directed onto the assay. The transponder has a photodetector that generates an electrical signal in response to light. In this embodiment, the assay is initially opaque to light at the target wavelength. If the assay exhibits a positive response to the sample, the assay becomes at least semi-transparent to the incident light. When this light is transmitted through the assay and onto the photodetector, the photodetector generates an electrical signal in response to the light. This electrical signal is then transmitted to a remote device to indicate that the assay exhibited a positive response to the sample.

In certain preferred embodiments, the assay-bearing transponders of the present invention are disposed of after one-time use. In order for such transponders to be cost-effective to make and use, the transponders must be low cost to make. As such, it is advantageous if the transponders are "passive" components. As such, the transponders do not have a power supply (i.e. a battery) but receive adequate power for their operation by passive means. In one embodiment, the power is provided via the antenna used to receive a wireless signal. In such embodiments, the antenna receives the signal and energy from the signal is used to store charge in a storage capacitor. The charge in the storage capacitor is used as a source of power for operation of the RF transponder. Such passive RF devices are well known to one skilled in the art and are not described in detail herein.

In another embodiment, the source for powering the transponder comes from the photodetector, which, as previously noted, produces current in response to light. In these embodiments, the current from the photodetector is used to introduce charge into a storage capacitor. The storage capacitor is then used as a source of power for the transmission of a signal from the transponder to a remote device, the transmission being indicative of the assay response.

The photodetector that generates the capacitor-charging current in response to a light source external to the transponder may be the same photodetector that is used to indicate assay response or a separate photodiode used solely to provide power through the conversion of light energy.

### BRIEF DESCRIPTION OF THE DRAWINGS

FIG. 1 is a perspective view of the diagnostic transponder according to one embodiment of the present invention.
FIG. 2 is a detailed view of the electronic circuit board embedded in the transponder illustrated in FIG. 1 with a sensor patch on the surface of the transponder schematically represented.
FIG. 3 is a perspective view of a sample container shown in phantom revealing the sample contained inside with the transponder illustrated in FIG. 1 placed within the sample.
FIG. 4 is a block diagram describing how a signal is received by the transponder illustrated in FIG. 1 and how the sample indication is obtained by the transponder and transmitted outside the sample container.
FIG. 5 is a schematic of an immunoassay patch.
FIG. 6 is a perspective of one embodiment of a system of the present invention with a source for light external to the transponder.
FIG. 7 is a circuit block diagram according to one embodiment of the present invention.
FIG. 8 is a circuit block diagram according to another embodiment of the present invention.
FIG. 9 is a detailed view of the electronic circuit board embedded in an electrochemical assay transponder and sensor patches on the surface thereof schematically represented.

### DETAILED DESCRIPTION

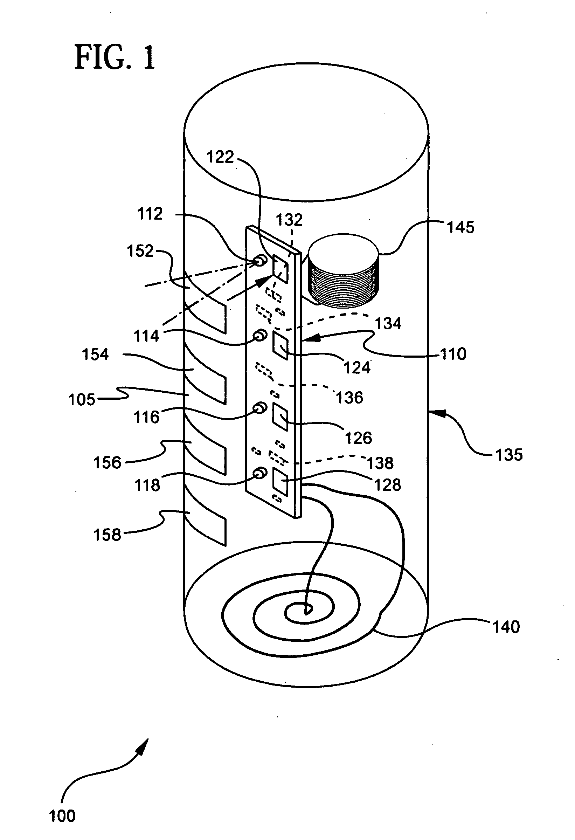

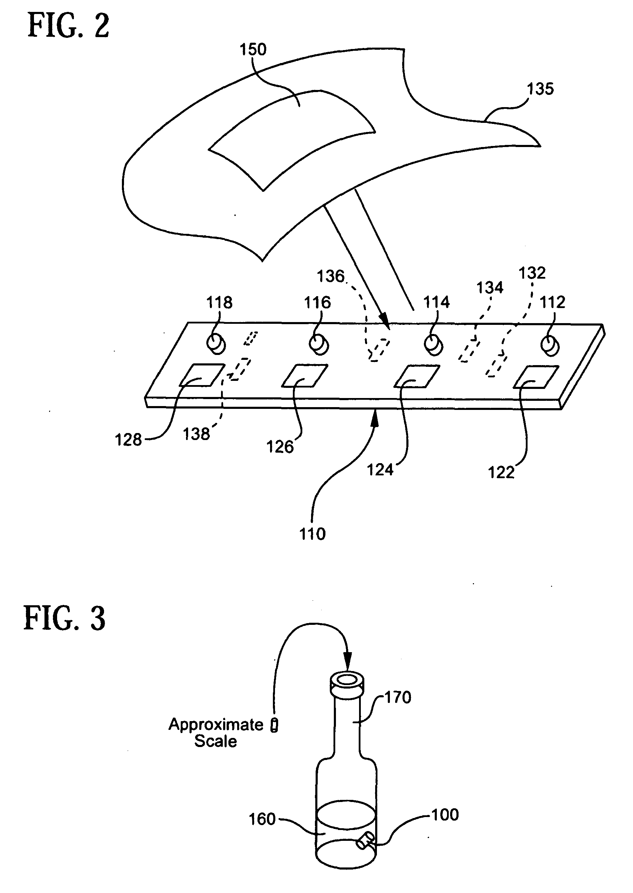

In the embodiment illustrated in FIG. 1 the transponder 100 has a circuit board 110 supported therein. The circuit board 110 is configured to perform four (4) assays on the sample (160; FIG. 3) in which the transponder 100 is placed. Although in the embodiment illustrated in FIG. 1 the transponder is provided with the capability of performing four (4) assays, it will be readily understood by one skilled in the art and it is contemplated by the present invention that the transponder can be configured to perform virtually any number of assays within the sample, constrained only by practical considerations such as transponder size, expense of manufacture, etc.

In order to perform the assay, a signal is generated by the circuit board 10. That signal is directed upon an assay that is placed on the surface of the transponder 100, such that the assay is in communication with the sample 160. In the embodiment illustrated in FIG. 1, transponder 100 has four (4) sensors. The sensors have a light emitting device 112, 114, 116, and 118 such as a light emitting diode. The sensors also have photodetectors 122, 124, 126, and 128.

The assays 152, 154, 156, and 158 are illustrated as rectangles placed upon the surface 105 of the transponder 100. The assays are positioned such that the light from LEDs 112, 114, 116, and 118 is incident on the backside thereof. The light from LEDs 112, 114, 116, and 118, incident on respective assays 152, 154, 156, and 158, is reflected therefrom and back on to respective photodiodes 122, 124, 126, and 128. Consequently, in this embodiment, the light reflected from assay 152, 154, 156, and 158 and incident upon respective photodiodes 122, 124, 126, and 128 provides an indication of the assay response to the sample 160.

In order for the transponder 100 to detect a change in the assay, there must be a discernable difference in the light reflected from the assay 152, 154, 156, and 158 when the assay has indicated a positive response to the sample compared to a negative response to the sample. As previously defined, a positive assay response indicates a sample condition at or above a threshold level or amount. A negative assay response indicates a sample condition below a certain threshold level or amount. Examples of various assays are described in detail below.

In one embodiment, if the assay exhibits a positive response to the sample, the assay 152, 154, 156, and 158 (or the patch on which the assay is formed) changes color. For example, as bacteria grow in the sample 160 over time, the bacteria give off carbon dioxide. Certain dyes change color in response to increased concentrations of carbon dioxide. The change in color obviously changes the wavelengths of light that are reflected/absorbed by the assay. Therefore, if the light reflected from the assay changes, that change will be detected by photodiodes 122, 124, 126, and 128. Photodiodes 122, 124, 126, and 128 emit an electrical signal indicative of the assay's positive response. That change in wavelength is communicated to respective integrated circuits 132, 134, 136, and 138.

The transponder in the illustrated embodiment has provided therein capacity to perform four separate assays. These assays are completely distinct, with their own LED (*e.g*. 112), photodiode (*e.g.* 122), integrated circuit (*e.g.* 132), and assay (*e.g.* 152). These assays can be the same or different, and each assay response is detected and communicated independently of the others. However, other embodiments are contemplated wherein multiple assays are interrogated using the same LED's (*e.g.* 112) and photodiodes (*e.g.* 122). Also, it is contemplated that all transponder circuitry could be placed on one integrated circuit (*e.g.* 132) obviating the need for multiple chips to accommodate multiple assays.

The assays 152, 154, 156, and 158 can be bonded, imprinted, molded, screened, vapor deposited or otherwise attached to specific sites on transponder surface 105. In the illustrated embodiment, the assays 152, 154, 156, and 158 are optically interrogated by respective LEDs 112, 114, 116, and 118. Therefore, the housing 135 is a material that is optically transparent to the wavelengths of light emitted by LEDs 112, 114, 116, and 118 and detected by respective photodiodes 122, 124, 126, and 128. Specific optically transparent materials such as glass are described in detail below. It should be noted that the material need not be optically transparent at all wavelengths, but the material does need to be optically transparent at the target wavelength(s). The optical transparency enables the light from the LEDs 112, 114, 116, and 118 to propagate through the housing material 135 and be incident on respective assays 152, 154, 156, and 158. This also permits the light reflected from assays 152, 154, 156, and 158 to propagate through the housing to be detected by respective photodiodes 122, 124, 126, and 128.

In one example, the fourplex assay illustrated in FIG.1 has four different assay patches each of which has a unique, detectable response to a certain sample condition. For example, patch 152 exhibits an increase in fluorescence if the pH of the sample is above a certain threshold. Patch 154 exhibits an increase in fluorescence if the concentration of a carbohydrate cleaving enzyme is at or above a certain threshold. Patch 156 changes color if the concentration of soluble carbon dioxide (CO₂) passes above a certain threshold. Patch 158 changes color of the concentration of oxygen (O₂) in the sample passes above a certain threshold. As illustrated in FIG. 1, each of these assays has a sensor associated therewith. The sensor interrogates the assay and, in response to any detected assay response, communicates that change in assay response to the transponder for transmission.

The specific material selected for the housing 135 for transponder 100 will depend upon the specific assay or assays being performed by the transponder and the target wavelengths for those assays. In the embodiments of the present invention where the assay is optically interrogated by sensors embedded within the transponder 100, the housing material 135 will be selected to be optically transparent at those wavelengths of light that will be used to detect a change in the assay 152, 154, 156, and 158 in response to the exposure of the assay to sample 160.

In the present invention, many different assays are contemplated as suitable. The types of assays that reside on the transponder can be virtually any biological, biochemical, immunological, nucleic acid, proteomic, genomic or other assay used in the medical diagnostic field. The assays themselves are conventional and not described in detail herein except as they are configured to operate with the transponder assay described herein. Biological and biosensor assays are described in US Patent Nos. 6,699,719 to Yamazuki et al. and 5,866,433 to Schalkhammer et al. Biological sensor arrays are described in Hanson, K. L., et al. "Biomolecules and Cells on Surfaces - Fundamental Concepts" in Microarray Technology and Its Applications, (U.R. Muller and D.V. Nicolau eds.) and Stekel, Dov, Microarray Bioinformatics, Section 1.2 "Making Microarrays" (Cambridge University Press 2005).

In addition to the optical test sensing technique employed in the embodiment illustrated in FIG. 1, the assays could be evaluated by other techniques such as fluorometric, colorimetric, luminescent, radiometric, SPR (surface plasmon resonance), amperometric, capacitive, potentiometric or other commonly implemented test sensing techniques. Conventional sensing techniques for detecting the results of fluroimmunoassays are described in U.S. Patent No. 5,677,196 to Herron et al.

Returning to the embodiment illustrated in FIG. 1, the assays 152, 154, 156, and 158 change color in response to certain changes in the growth media environment (not shown) placed in. Growth media are well known to one skilled in the art and are not described in detail herein. In one example, as the concentration of bacteria in the sample 160 increases (as caused by the growth media placed in the sample to facilitate and accelerate such growth) the bacterium gives off increased concentrations of carbon dioxide. The increasing concentrations of carbon dioxide change the pH of the sample 160. In response to this change in pH, the assay 152, 154, 156, and 158 changes color. This change in color is detected by the change in light absorbance of the light emitted by the respective LEDs 112, 114, 116, and 118. This change in absorbance is detected by the respective photodiodes 122, 124, 126, and 128. The photodiodes 122, 124, 126, and 128 send a voltage proportional to the change in the light reflected back to the photodiode 122, 124, 126, and 128 from respective assay 152, 154, 156, and 158. This voltage is transmitted to the respective one of microcomputers 132, 134, 136, and 138 mounted on the circuit board 110. In the illustrated embodiment, photodiodes 122, 124, 126, and 128 each have an associated microcomputer 132, 134, 136, and 138.

It is advantageous if the transponder 100 is not required to have a battery. In FIG. 1, power is provided by the antenna coil 140. When a signal is received by coil antenna 140, the signal is transmitted to circuit board 110. The signal is then transmitted to integrated circuit 132, 134, 136, and 138. Power from the signal received by coil antenna 140 is used to charge capacitors (not shown) on the circuit board 110. These capacitors can be used as a power source for sensors 112, 114, 116, and 118 and photodiodes 122, 124, 126, and 128 in addition to integrated circuits 132, 134, 136, and 138 on the circuit board. One skilled in the art is well aware of the circuit elements necessary for the antenna to function as a power source for the components mounted on circuit board 110. These components are not described in detail herein. One skilled in the art will appreciate that the transponder of the present invention can be active (*i.e.* have its own power source (*e.g.* a battery) or passive (*i.e.* the transponder does not have its own power source, but is powered passively by some external energy source (*e.g.* electromagnetic energy, electrostatic energy and the like). Passive and active RFID devices, and power supplies therefore, are described in Finkenzeller, K., RFID Handbook: Fundamentals and Applications in Contactless Smart Cards and Identification, Chap, 3, pp. 29-59 (2003) One skilled in the art will appreciate that the mechanism for powering the transponder will depend upon the system in which the transponder will operate (*e.g.*, the frequency of operation, the distance between the transponder and the reader, etc.)

The signals transmitted from photodiode 122, 124, 126, and 128 and converted into electrical signals for transmission to respective integrated circuits 132, 134, 136, and 138 are modulated onto an RF carrier wave and transmitted using antenna 145. In the embodiment illustrated in FIG. 1 transmitting antenna 145 is illustrated as a helical antenna. One skilled in the art is aware that many different antenna configurations are possible. The specific antenna configuration will depend largely upon the degree of separation between the transponder 100 and the device that will receive the information transmitted from the transponder 100.

Referring to FIG. 2, there is a schematic that provides a detail view of the circuit board 110 that supports certain illustrated components (*e.g.* sensors 112, 114, 116, and 118, photodetectors 122, 124, 126, 128, integrated circuits 132, 134, 136, and 138, respectively). As illustrated schematically in FIG. 2, signals generated from one of LED's 112, 114, 116, and 118 are directed toward and incident on assay patch 150 (in this schematic only one representative assay patch is illustrated). Although the schematic of FIG. 2 does not illustrate one-to-one correspondence between the number of LEDs 112, 114, 116, and 118 and assay patches 150, one skilled in the art will appreciate that any numerical relationship between the number of LEDs and the number of assay patches is possible. Multiple light emitting diodes could be used to interrogate different aspects of the same assay patch, or there can be a configuration in which there is one LED for interrogating each assay patch (i.e. a one-to-one correspondence between the number of LEDs and the number of assay patches as is illustrated in FIG. 1).

FIG. 3 illustrates the transponder 100 immersed in sample 160. Both transponder 100 and sample 160 are in sample bottle 170. Sample bottle 170 is any suitable sample container. Sample container, as used herein, includes, by way of example and not limited to a sample slide, a sample dish, a sample tray, a sample bottle etc. As such sample containers can be either generic (*i.e.* sample containers that are suited for use in multiple applications or systems) or specific (sample containers adapted for use in a particular system or analytical tool. Examples of the latter are the sample containers adapted for use in the Becton Dickinson BACTEC^{™} system. However, sample bottle 170 is made of a material that does not substantially effect the transmission of RF signals, since transponder 100 sends and receives such signals when placed in sample container 170.

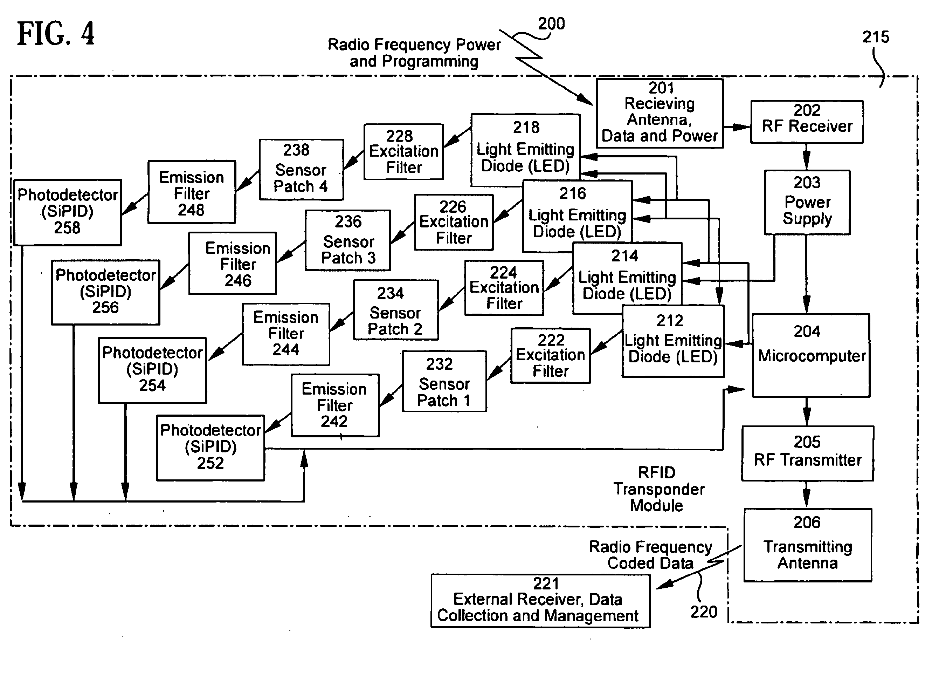

FIG. 4 is a block diagram illustrating the operation of one embodiment of the transponder 215 of the present invention. A signal represented as arrow 200 is received by the receiving antenna 201 of the transponder 215. Receiving antenna 201 provides both data and power to the transponder 215. The receiving antenna 201 is an integral part of the transponder 215. Its placement and configuration are determined by the power needs of the transponder 215, the distance between the transponder 215 and the external device with which it communicates, and other considerations.

The received signal is conveyed to the radio frequency (RF) receiver 202. In certain embodiments, the receiver has an analog to digital (A/D) converter that converts the received RF signal to a digital signal. In other embodiments, the signal undergoes A/D conversion in the microcomputer. From there the signal is conveyed to the power supply 203. As previously noted, the power supply 203 is specifically one or more storage capacitors which can be used as a source of power for the components in the transponder. The power supply 203 is used as a source of power for the microcomputer 204 (in other embodiments the LEDs can have their own power source). Although only one microcomputer 204 is illustrated in FIG. 4, other embodiments contemplate one microcomputer for each sensor loop. In the context of these embodiments, a sensor loop is the signal from the light emitting diode 212, 214, 216, and 218 through respective excitation filter 222, 224, 226, and 228 to respective sensor patches 232, 234, 236, and 238 to respective emission filters 242, 244, 246, and 248 and onto respective photodetectors 252, 254, 256, 258. Excitation filters 222, 224, 226, and 228 and emission filters 252, 254, 256, and 258 are employed to limit those wavelengths transmitted through the sensor loop to the wavelengths of interest. In one example, signals from the microcomputer 204 instruct an LED, e.g. 212 from the LED array 212, 214, 216, and 218 to emit a light signal that is used to interrogate its respective sensor, 232, in the sensor array 232, 234, 236, and 238. The result of the interrogation is transmitted to its respective photodetector, 252, in the photodetector array 252, 254, 256, and 258. The signal from photodetector 252 in the photodetector array 252, 254, 256, and 258 is transmitted to the microcomputer 204. Of course, more than one sensor loop can be operating simultaneously. The photodetector 252, 254, 256, and 258 in the illustrated embodiment converts the received light signals to a voltage which is then transmitted to the microcomputer. The microcomputer modulates this signal onto a carrier and that signal 220 is transmitted by an RF transmitter 205 via the transmitting antenna 206. The information 220 is sent to an external receiver, data collection and management system, 221 or any other suitable mechanism for receiving the information from the transponder 215.

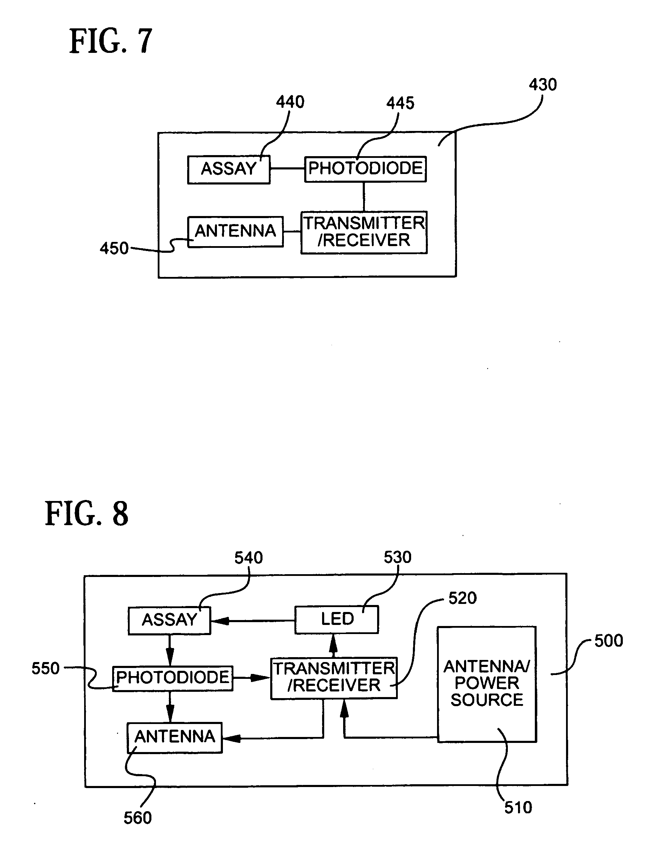

FIG. 8 is a circuit block diagram of the transponder illustrated in FIG. 1. The transponder 500 has two antennae, 510 and 560. As previously described, antenna 510 receives a signal. The transponder 500 is configured to use the received signal as a power source for transponder operation, avoiding the need for a battery or other embedded power source. Therefore antenna 510 is designated antenna/power source. The signal is conveyed from the antenna/power source 510 to the transceiver chip 520. The transceiver chip, prompted by the received signal, causes the LED 530 to interrogate the assay 540 by emitting light directed at the assay 540. The light reflected from the assay is incident on photodiode 550. If the assay response is positive, the photodiode will detect a corresponding light signal reflected from the assay. The fact of the reflected signal is communicated to transceiver chip 520, which causes a signal communicating the positive response to be modulated onto an RF carrier and transmitted via antenna 560.

As previously noted, many different assays are contemplated. One example is a small, thin patch of sensor chemicals that is disposed on the outer surface of the transponder. This patch is sensitive to being either oxidized or reduced by the solution in which the transponder is placed. When testing biological samples, it is common to use a growth media in which to stimulate growth of certain microorganisms that may be present in the sample. The growth media is used to amplify the presence of the target organisms in order to facilitate detection.

In one embodiment of a chemical sensor patch, such a patch changes color depending upon the presence or absence of, for example, oxygen ions. When the concentration of oxygen ions in the sample exceeds a certain threshold amount, the chemical patch will change color. The color of the patch is interrogated by light generated from the light emitting diode mounted on the electronic circuit board within the transponder housing. The light emitting diode is configured such that it directs light onto the chemical patch. If the patch responds to an increase in oxygen concentration by changing color, then the light absorbance of the patch changes. This results in a change in the light that is reflected back to photodiode sensors on the electronic circuit board.

The photodiode measures the amount of light reflected from the patch. The photodiode generates a voltage that is proportional to the amount of detected light to a microcomputer mounted on the same circuit board. The voltage is measured by the microcomputer and a coded digital signal representing this value is transmitted by RF frequencies to a receiving device. As previously described, the receiving device is at some distance from the transponder and external to the environment in which the transponder is placed.

In yet another embodiment, the assay is a fluorescent indicator. Fluorescent indicators are well known to those skilled in the art and employed in a variety of biological assays. Briefly, the intensity of a fluorescent assay varies depending upon the environment in which the fluorescent indicator is placed. In one example, the intensity of the fluorescence of a chemical patch changes as a function of the acidity of the environment in which the assay patch is placed. Such a sensor could be used in conjunction with the LED and photodiodes described in previous embodiments. That is, light from the LED is directed onto the fluorescent indicator assay patch. In response to the light incident thereon, the patch emits fluorescent light. A fluorescent signal indicative of the acidity of the environment is emitted from the patch. This fluorescent signal is directed to the photodiode. The photodiode converts the fluorescent signal into an electrical signal. The electrical signal indicates the degree of intensity of the fluorescent signal, which in turn is indicative of the patch's response to the environment in which it is placed.

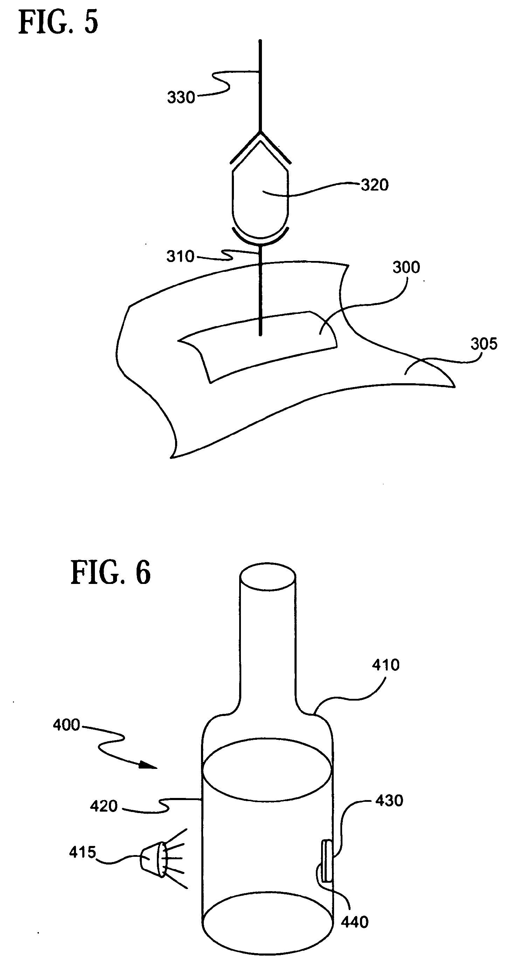

An example of an immunoassay patch is illustrated in FIG. 5. The assay patch 300 affixed to transponder surface 305 has an antibody 310 attached thereto. A secondary antibody 330 is suspended in the solution in which the patch is placed. This secondary antibody 330 is floating free in growth medium previously disposed in the sample container. The biological sample may contain the target analyte 320 of interest. If present, the analyte 320 selectively bonds to the antibody 310 attached to the patch 300. When the target analyte 320 is in proximity to both the first antibody attached to the patch and the second antibody 330 floating proximate to the patch, a sandwich is formed. The sandwich of first antibody 310, target analyte 320 and second antibody 330 is illustrated in FIG. 5. This antibody sandwich complex causes a fluorescent signal to be emitted from the patch upon excitation by a light source (not shown). The fluorescent signal is detected and quantified in the manner described above. This format for assay imaging is referred to as fluorescent resonance energy transfer (FRET). FRET is a well known assay to those skilled in the art and is therefore described only briefly herein.

FRET is a technique for measuring interactions between two molecules (*e.g.* two proteins in vivo, antibody-antigen). In this technique, two different fluorescent molecules (first and second fluorophores) are genetically fused to the two molecules of interest. Regular (non-FRET) fluorescence occurs when a fluorescent molecule (fluorophore) absorbs electromagnetic energy of one wavelength (the excitation frequency) and re-emits that energy at a different wavelength (the emission frequency). Conceptually, each fluorophore has a two-peaked spectrum in which the first peak is the excitation peak, and the second is the emission peak.

For the combined FRET effect, the emission peak of the donor fluorophore must overlap with the excitation peak of the acceptor fluorophore. In FRET, light energy is added at the excitation frequency for the donor fluorophore, which transfers some of this energy to the acceptor fluorophore, which then re-emits the light at its own emission wavelength. The net result is that the donor emits less energy than it normally would (since some of the energy it would radiate as light gets transferred to the acceptor instead), while the acceptor emits more light energy at its excitation frequency (because it is getting extra energy input from the donor fluorophore).

Sources of background noise, or cross-talk, occur because (1) the donor radiates slightly (but not optimally) at the acceptor's emission wavelength, and (2) the acceptor is excited somewhat by the donor's excitation wavelength. Both of these will cause a non-FRET signal at the emission wavelength of the acceptor that needs to be modulated. There are two ways of doing this. One is to express each fluorophore individually in the same conditions in vivo in which FRET will be performed, and measuring this cross-talking. Thus, one would want to measure how much energy the donor radiates at the acceptor emission wavelength, as well as measuring how much the acceptor can be excited by the donor's excitation wavelength. A second, and easier, control to perform is to photobleach the acceptor fluorophore (by overwhelming it with light at its excitation frequency) to "knock out" its activity. This eliminates the energy transfer from donor to acceptor and typically causes an increase in the emission from the donor (due to the fact that it is not transferring energy to the acceptor). This increase of donor emission due to photobleaching of the acceptor is known as "dequenching" and allows one to determine how much the donor fluorophore is radiating at the acceptor emission frequency.

The benefit of FRET technology is that it has excellent resolution. The physics of the FRET energy transfer between donor and acceptor (which is non-radiative) is such that the efficiency falls off with the sixth power of the distance between molecules. Thus, FRET typically occurs when the two fluorophores are within 20 A -100 A (0.002 µm -0.01 µm) of each other, which means that the fluorophores must be brought together via very close molecule-molecule (*e.g.* protein-protein) interactions. Since molecules in biological samples can be about 50A to about 200A in diameter, the position of the fluorophores within the protein complex is critical. If the fluorophores are over 200 A apart while the proteins to which they are fused interact with each other, no signal will be observed. Often, FRET experiments are done with just the putative interaction domains of the two proteins under examination because of the potential distance between the fluorophores in this environment. Complete molecules would likely cause the fluorophores to be too far apart for FRET to be observed.

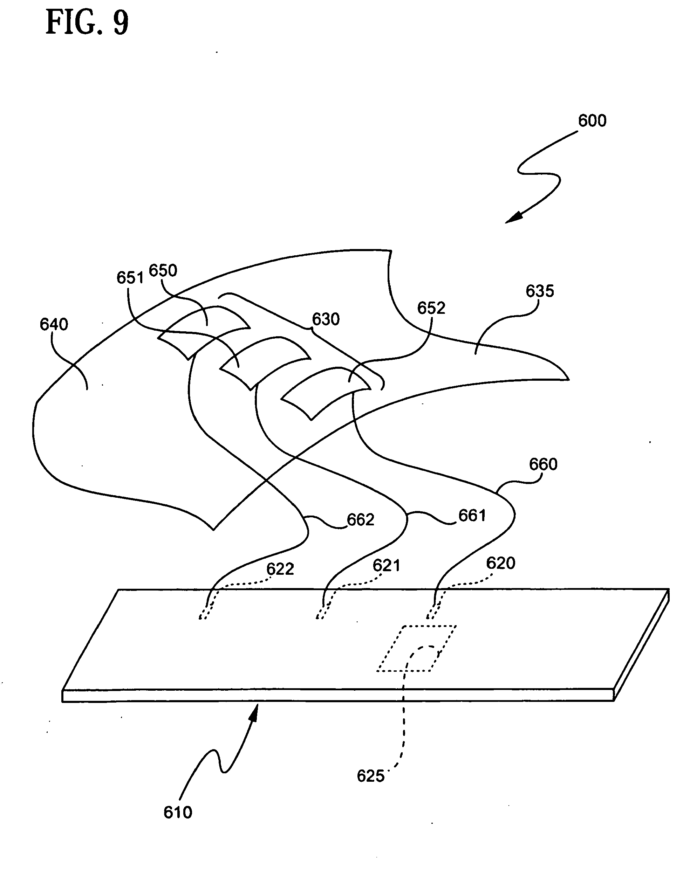

Referring to FIG.9 in yet another embodiment, the assay is an electrochemical assay. As in the previous embodiments, the electrochemical assay 630 is a patch bonded to the surface 640 of the transponder 600. However, since the nature of this assay is electrochemical, the electrochemical assay 630 has electrodes 650, 651 and 652 that are electrically connected to the electronic circuit board 610 within the transponder 600. The electrochemical assay 630 has two sensor patches 650 and 651 which are also two of the three electrodes. The sensor patches 650 and 651 have a material or materials with conductivity that varies with the environment in which the material is placed. Examples of such materials are lactate oxidase or glucose oxidase. The conductivity of the sensor patches 650 and 651 varies depending upon the concentration of lactate or glucose in the surrounding environment. In a biological sample, microbes consume glucose. Therefore, a below normal concentration of glucose might indicate a rather high concentration of microbes in the sample. High concentration of microbes would be detected by a decrease in the conductivity between the electrodes due to the deceased conductivity of the material placed between them. This decrease in conductivity is caused by the decreased concentration of glucose in the sample.

In this embodiment, the electrodes 650, 651 and 652 are electrically connected (via wires 662, 661 and 660 and contacts 622, 621 and 620, respectively) to an integrated circuit 625 mounted on the circuit board 610 inside the transponder 600. The change in current from patches 650 and 651 is detected by the integrated circuit 625. Electrode 652 is the reference electrode and, as such, its conductivity does not vary with the environment. Any change in the conductivity of electrodes 650 and 651 is measured against the reference electrode. The integrated circuit 625 generates a signal in response to the detected decrease in current. In turn, a signal indicating the measured result is modulated onto an RF carrier and transmitted by the transmitter (not shown). The transmitted signal is received by a device (not shown) remote from the transponder 600.

In yet another embodiment, the present invention is used in conjunction with continuous monitoring blood culturing instruments such as the Bactec™ instrumented blood culture systems from Becton, Dickinson and Company. In such systems a blood sample is introduced into the blood culture bottle which, typically, has growth media disposed therein. Many different media are employed depending upon the culture that is desired. Examples of media include blood culture media, aerobic/F media, etc. In the Bactec™ type of system, the blood or other sample is introduced into the blood culture bottle with the media therein. The blood culture bottle is then placed in a device for continuous monitoring of the sample. Such monitoring may take hours or days until a change in the sample is observed. The present invention is advantageous because such continuous monitoring is potentially not required. Rather, the transponder can be placed in the blood culture bottle with the media and the sample and, when a change in the sample is observed by the assay and transmitted to the circuitry within the transponder, that result can be transmitted to a remote station. That same signal can be used to indicate that the assay is complete. In the present invention, this embodiment is described with reference to FIG. 6.

Referring to FIG. 6, an RFID chip 430 is affixed to the interior surface of sample container 410. The chip 430 can be affixed to any optically transparent wall of the container 410 as long as the placement affords contact between the assay 440 and the sample 420. The chip 430 is either an aggregation of discrete components in a package or a packaged monolithic device (chip). As previously noted, it is advantageous, from a cost perspective, if the RFID chip has no built-in battery, and the power to the chip (integrated circuit) 430 is provided by the external energy source. In this embodiment, the light from the external LED acts as an energy source for the power generated by the photosensor circuit (photodiode 445) in the chip 430. As such, the relative placement of the chip 430, light source 415 and assay 440 is such that the optical pathway from the light source 415 to the photodiode 445 is through the assay 440. The relative placement of these components in FIG. 6 is conceptual only. The applicants contemplate that any relative placement that accomplishes the objectives state above is suitable. The photosensor circuit generates a small current when light is incident on the chip 430. Such chips are available from a variety of sources and are easily obtained commercially. When the chip is interrogated by light, a current is generated that powers the RF circuit to transmit the assay results via an antenna to an RF receiver. The chip 430 is illustrated in circuit block diagram FIG. 7. In one embodiment, the photosensor circuit (photodiode 445) is proximate to a dye assay 440 that is formed on the surface of the chip 430. The assay dye is pH sensitive.

One example of a pH sensitive dye is bromcresol purple. As bacteria grow in the sample they give off carbon dioxide, which changes the pH of the sample. The pH change causes the dye to change from its basic form (which absorbs light at a primary wavelength of about 590 nm) into its acid form (which does not strongly absorb at this wavelength). This results in a decrease of light absorption at about 590 nm. Placing an LED 415 near the chip 430 mounted on the interior surface of bottle 410, allows the chip to be optically interrogated by a light source external to the bottle. If the LED emits light at or near the 590 nm wavelength (a filter can be used to limit the wavelength of light transmitted onto the assay), a change in light absorption by the bromcresol purple, caused by the color change, can be detected. Specifically, the 590 nm wavelength light will be absorbed up to the point of which the pH change to the acid detectably lowers the dye's ability to absorb light at or near this wavelength. When the dye absorbs measurably less light at this wavelength, the light is able to transmit through the dye and strike the photosensor 445 of the chip underlying the dye. The resulting current causes the chip 430 to respond by transmitting an RF signal indicating the positive response of the assay to the change in the sample's pH. The transmitted RF signal is detected by a receiver placed near to the chip but outside the culture bottle 410.

A variety of different dyes can be used. These dyes can be selected to work with a particular LED or LED/light filter combination. The following table lists several dyes and their maximum light absorption in the basic form. These dyes are listed by way of example, and not by way of limitation.

**Table 1**

| **DYE** | **Wavelength Absorbed (Base Form)** | **pK** |
|---|---|---|
| Thymol Blue | 430 nm | 1.7 |
| Methyl Orange | 464 nm | 3.4 |
| Bromphenol Blue | 592 nm | 3.9 |
| Bromcresol Green | 617 nm | 4.7 |
| Methyl Red | 427 nm | 5.0 |
| Chlorophenol Red | 573 nm | 6.0 |
| Bromcresol Purple | 591 nm | 6.3 |
| Bromthymol Blue | 617 nm | 7.1 |
| Phenol Red | 558 nm | 7.9 |
| Cresol Red | 572 nm | 8.2 |
| Phenolphthalein | 553 nm | 9.4 |
| Thymolphthalein | 598 nm | 10 |

The pK values are also listed for these dyes. The pvalue is the pH at which 50% of the dye is in the base form and 50% of the dye is in the acid form. For a carbon dioxide sensor for bacterial growth, it is advantageous if the pK is between about 6 and about 8 (*i.e.* near a neutral pH of 7). Examples of dyes that meet this criterion include chlorophenol red, bromcresol purple, bromthymol blue and phenol red.

The dye can be affixed to the chip in a variety of ways. In one embodiment the chip is provided with an overcoat of glass to protect the electronic components from coming into contact with the sample that is being evaluated. The dyes are covalently attached to the glass using a silicon attachment chemistry. Specifically, the silicon will have an amino (NH₂), hydroxyl (OH) or acid functional groups which can be used to attach the dye thereto. Such mechanisms for attaching dyes to substrates are well known in the pH paper field where hydroxyl groups are commonly used to attach dyes to paper.

Another method for attaching the dye to the chip is to use a sol-gel layer containing the dye. The sol-gel with the dye is placed on the glass surface, to which it adheres. The sol-gel can be composed of, for example, a mixture of tetraethoxysilane (TEOS) and phenoltrimethoxysilane (PTMOS). These two components, typically in a two-to-one molar ratio, also have a dye such as bromcresol purple dissolved therein. The two silanes form a sol-gel that allows water and carbon dioxide to enter. One method for preparing a sol-gel is described in Andreou, V., et al. "Determination of Pesticide in Water using Fiber-Optic Biosensors Based on Immobilized Enzymes," Environ Sci. & Pollut. Res. (Special Issue), Vol. 3, pp. 290-291 (2002).

In this embodiment the chip provides only binary information. Specifically the chip only indicates whether light does or does not transmit through the dye. Therefore, in this embodiment the chip does not provide enough information to generate a growth curve for the target substance in the sample. Specifically the chip cannot convey the amount by which the concentration of the target substance in the sample increases over time. However, a dye can be selected that reflects a different threshold concentration of the target substance (*e.g.* carbon dioxide) in the sample. That is, dye A might change color (thereby going from absorptive for a particular wavelength to transmissive for that wavelength) at a first concentration and dye B may change color at a second, higher, concentration. An increasing concentration of carbon dioxide in the sample can be tracked in this manner.

In an alternative embodiment, the surface of the chip is modified by attaching a bacterial signature DNA sequence thereto. Instead of the dye-based approach described in the previous embodiment, this embodiment uses a capture sequence of DNA on the transponder surface to test for the presence of target bacteria in the sample. In contrast to the previous embodiment, in this embodiment the chip has an optically transparent coating to which the capture sequence of DNA is coupled. The photodetector initially detects the optical signal incident thereon (*i.e.* before the assay exhibits a positive response to the sample, it is optically transparent). The assay transponder chip is placed in the sample bottle in contact with the sample therein. Bacteria to be identified is lysed and added to the sample. A detector sequence of DNA coupled to an optical probe dye is also added to the sample. As the bacteria in the sample attaches to the capture DNA on the transponder surface, detector sequences of DNA with the suitable optically opaque dye probe affix to the bacterial DNA. As an increased number of dye probes attach to the surface of the transponder, the surface becomes optically opaque to the incident light. At some point, due to the reduced amount of light transmitted through the transponder surface to the underlying photodetector, the electrical signal from the photodetector goes from on to off. This indicates that a certain threshold concentration of bacteria in the sample has been reached. Since, in this embodiment, the signal goes from on to off, the absence of signal indicates to the receiver that the threshold concentration of the bacteria in the sample has been obtained. Since power is required for transmission, and the transponder is powered by the light received from the photodetector, no transmission from the chip occurs in this off-state. The lack of signal indicates positive assay response in this embodiment. In these embodiments, it is preferable to configure the device such that, at least initially, the device is on. That way the transition from an on state to an off state can be properly interpreted as a positive response. If the device is configured to be in the off state initially, then it is difficult to determine whether the continued off state is attributable to the assay response or a faulty device.

It is also contemplated that the transponder of the present invention might be used for in vivo or in vitro testing. For in vivo testing, the transponder is implanted in a patient for detecting some physiological condition. For example, the assay on the surface of the transponder could be configured to detect elevated glucose levels in the patient. Such an assay could be used to monitor a diabetic patient. The assay would be reversible so that the transponders would not have to be constantly removed and replaced.

The transponder would periodically interrogate the assay to determine the patient's glucose level. The results of the analysis would be transmitted from the transponder to a remote receiver previously described. In this way, a patient could self-interrogate their glucose level using a wireless handheld device without the need for drawing blood for this analysis. This would provide a huge advantage to a diabetic patient who avoids monitoring their glucose levels because of the need for painful "sticks" in order to determine blood glucose levels.

The invention could also be used for in vitro testing in environments where a test sensor might adversely affect the local environment. For example, in large bioprocessing containers the transponder could monitor the viability of cell culture lines expressing Human Growth Hormone or recombinant bacteria expressing influenza vaccine. The sensor patch could employ a cell viability indicator such as diazoresor-cinol (*e.g.* Rezazurin). Rezazurin is a commercially available metabolic activity indicator. In its oxidized form the substance is light purple and in its reduced form is light pink. A transponder with such an assay on the surface thereof is configured to detect the change from its oxidized form (deep purple) to its reduced form (light pink) and communicate the fact of the color change for transmission to a remote device.

If cell viability became compromised, further testing of the bioprocessing container environment by other sensor patches or transponders (monitoring temperature or pH, for example) would prompt the supervisor of the bioprocessor to modify the environmental conditions accordingly.

In the embodiment described above where the assay is configured to selectively bind methicillin resistant staphylococcus aureus (MRSA), the assay changes color as bacterial cells have multiplied on the site. An antibody is used to bind these bacterial cells to the assay. The sensor, either internal to the transponder or external to a chip on which the assay is formed, spectroscopically measures changes in the color (*e.g.* light absorption) of the assay. Depending upon the complexity of the system used to make the measurement, the system may simply indicate that the surfaces change from one where light at the selective wavelength is transmitted through the surface to one where the light is mostly absorbed by the surface. In such a system, the output is essentially binary (that is, either yes or no). In other embodiments, the measurements are more complicated and the information obtained from these measurements is accordingly more detailed. For example, different values of transmissivity through the surface of the assay might be measured, which could indicate increasing concentrations of the target substance in the sample.

In yet other embodiments, the RF transponder with associated assay described above can be combined with a magnetized material such as ferrite powder and polymer resin. Such a biotransponder is moveable using an externally applied magnetic field. The transponder could be a part of a magnetic stirring element used to agitate the growth media in the sample. This would ensure that the sample is adequately mixed during measurement. Thus, a result obtained is more likely to represent the condition in the entire sample as opposed to an isolated portion of the sample that happened to have a higher or lower concentration of the target substance than in other portions of the sample.

One advantage of the RFID transponder assay described above is the fact that the chip in the transponder contains a unique address. Since the chip has a unique address, and that address can be read upon interrogation, there is no need to have a barcode on the label of the sample bottle.

## Claims

1. A system for detecting and communicating an assay response comprising:
a transponder (100) comprising:
a receiving antenna (140) for receiving an RF signal;
a receiver for receiving the RF signal from the antenna (140);
a transmitter for sending an RF signal to a transmitting antenna (145) for transmission
wherein the receiving antenna and the transmitting antenna are either the same or different and
wherein at least the transmitter and the transmitting antenna are disposed in a housing (135);
an assay (152, 154, 156, 158, 440); and
a sensor for detecting an assay response to an environment in which the transponder is placed, such as a liquid biological sample or blood,
**characterized in that**
said assay (152, 154, 156, 158, 440) is bonded to a surface of the transponder housing (135),
the transponder is a passive RF device,
the system further comprises an LED which directs light onto the assay (152, 154, 156, 158, 440), and
the sensor further comprises a photodetector (122,124,126,128) which detects light directed from the assay (152, 154, 156, 158, 440).

2. The system of claim 1 wherein the assay (152, 154, 156, 158, 440) is attached to the transponder surface (105, 305) by one of bonding, imprinting, molding, screening or vapor deposition.

3. The system of claim 1 wherein the transponder power is obtained from the RF signal received from the antenna or from a light signal received by the photodetector (122,124,126,128).

4. The apparatus of claim 1 wherein the assay (152, 154, 156, 158, 440) comprises a bacterial DNA sequence that selectively binds to a detector DNA sequence.

5. The system of claim 4 further comprising a sample container (170) for holding the liquid biological sample.

6. The system of claim 5 wherein the environment further comprises a growth media in the sample container (170).

7. The system of claim 1 wherein the LED is external to the transponder (100, 215, 500, 600).

8. The system of claim 1 wherein the transponder (100, 215, 500, 600) has a plurality of assays (152, 154, 156, 158, 440) and a plurality of sensors (232), wherein respective one of said assays (152, 154, 156, 158, 440) is interrogated by respective one of said sensors (232) to detect the assay response.

9. The system of claim 1 wherein the assay (152, 154, 156, 158, 440) is a dye formed on the surface of the transponder (105, 305), wherein the dye changes color in response to the pH of the environment in which the assay (152, 154, 156, 158, 440) is placed.

10. The system of claim 1 or 7 where the housing (135) is optically transparent to the light transmitted from the LED and received by the photodetector (122,124,126,128).

11. The system of claim 1 wherein the assay (152, 154, 156, 158, 440) is a medical diagnostic assay selected from the group consisting of a biological assay, a biochemical assay, an immunological assay, a nucleic acid assay, a proteomic assay, and genomic assay.

12. The system of claim 1 wherein the assay response is selected from the group consisting of a fluorometric response, colorimetric response, luminescent response, radiometric response, statistical pattern response, amperometric response, capacitive response and potentiometric response.

13. The apparatus of claim 12 wherein the assay (152, 154, 156, 158, 440) is an electrochemical assay (630) comprising a sensor patch (650, 651) that exhibits a conductivity that depends upon the environment in which the transponder (105, 305) is placed wherein the sensor detects a change in the conductivity of the sensor patch (650, 651).

14. The apparatus of claim 13 wherein the sensor patch (650, 651) comprises an electrode (650, 651, 652) having a conductivity that varies in response to the environment and a reference electrode.

15. The apparatus of claim 14 wherein the assay response is a potentiometric response.

## Patentansprüche

1. System zum Erkennen und Übertragen einer Assay-Reaktion, mit:
einem Transponder (100) mit:
einer Empfangsantenne (140) zum Empfangen eines HF-Signals;
einem Empfänger zum Empfangen des HF-Signals von der Antenne (140);
einem Sender zum Senden eines HF-Signals an eine Sendeantenne (145) zur Übertragung desselben;
wobei die Empfangsantenne und die Sendeantenne entweder identisch oder verschieden sind; und
wobei zumindest der Sender und die Sendeantenne in einem Gehäuse (135) angeordnet sind;
einem Assay (152, 154, 156, 158, 440) und
einem Sensor zum Erkennen einer Assay-Reaktion auf eine Umgebung, in welcher der Transponder angeordnet ist, wie beispielsweise eine flüssige biologische Probe oder Blut,
**dadurch gekennzeichnet, dass**
das Assay (152, 154, 156, 158, 440) mit einer Oberfläche des Transpondergehäuses (135) verbondet ist,
der Transponder eine passive HF-Vorrichtung ist,
das System ferner eine LED aufweist, die Licht auf das Assay (152, 154, 156, 158, 440) richtet, und
der Sensor ferner einen Fotodetektor (122, 124, 126, 128) aufweist, der von dem Assay (152, 154, 156, 158, 440) weg gerichtetes Licht erkennt.

2. System nach Anspruch 1, bei welchem das Assay (152, 154, 156, 158, 440) an der Transponderfläche (105, 305) entweder durch Verbonden oder Prägen, Formen, Siebdrucken oder Aufdampfen angebracht ist.

3. System nach Anspruch 1, bei welchem die Transponderenergie aus dem von der Antenne empfangenen HF-Signal oder aus einem von dem Fotodetektor (122, 124, 126, 128) empfangenen Lichtsignal erhalten wird.

4. System nach Anspruch 1, bei welchem das Assay (152, 154, 156, 158, 440) eine bakterielle DNA-Sequenz aufweist, welche sich selektiv an eine Detektor-DNA-Sequenz bindet.

5. System nach Anspruch 4, ferner mit einem Probenbehälter (170) zum Aufnehmen der flüssigen biologischen Probe.

6. System nach Anspruch 5, bei welchem die Umgebung ferner ein Wachstumsmedium in dem Probenbehälter (170) aufweist.

7. System nach Anspruch 1, bei welchem die LED außerhalb des Transponders (100, 215, 500, 600) angeordnet ist.

8. System nach Anspruch 1, bei welchem der Transponder (100, 215, 500, 600) mehrere Assays (152, 154, 156, 158, 440) und mehrere Sensoren (232) aufweist, wobei ein jeweiliges Assay (152, 154, 156, 158, 440) von einem jeweiligen der Sensoren (232) zum Erkennen der Assay-Reaktion abgefragt wird.

9. System nach Anspruch 1, bei welchem das Assay (152, 154, 156, 158, 440) ein auf der Oberfläche des Transponders (105, 305) ausgebildeter Farbstoff ist, wobei der Farbstoff seine Farbe in Reaktion auf den pH-Wert der Umgebung ändert, in welcher das Assay (152, 154, 156, 158, 440) angeordnet ist.

10. System nach Anspruch 1 oder 7, bei welchem das Gehäuse (135) für das Licht, welches von der LED ausgesendet und von dem Fotodetektor (122, 124, 126, 128) empfangen wird, optisch transparent ist.

11. System nach Anspruch 1, bei welchem das Assay (152, 154, 156, 158, 440) ein medizinisch-diagnostisches Assay ist, welches aus der Gruppe bestehend aus einem biologischen Assay, einem biochemischen Assay, einem immunologischen Assay, einem Nukleinsäure-Assay, einem Protein-Assay und einem Genom-Assay ausgewählt ist.

12. System nach Anspruch 1, bei welchem die Assay-Reaktion aus der Gruppe gewählt ist, welche aus einer fluorometrischen Reaktion, einer kolorimetrischen Reaktion, einer lumineszenten Reaktion, einer radiometrischen Reaktion, einer statistischen Muster-Reaktion, einer amperometrischen Reaktion, einer kapazitiven Reaktion und einer potentiometrischen Reaktion gebildet ist.

13. System nach Anspruch 12, bei welchem das Assay (152, 154, 156, 158, 440) ein elektrochemisches Assay (630) ist, das ein Sensorfeld (650, 651) aufweist, welches eine Leitfähigkeit besitzt, die von der Umgebung abhängig ist, in welcher der Transponder (105, 305) angeordnet ist, wobei der Sensor eine Veränderung der Leitfähigkeit des Sensorfeldes (650, 651) erkennt.

14. System nach Anspruch 13, bei welchem das Sensorfeld (650, 651) eine Elektrode (650, 651, 652) mit einer Leitfähigkeit, die in Reaktion auf die Umgebung variiert, und eine Referenzelektrode aufweist.

15. System nach Anspruch 14, bei welchem die Assay-Reaktion eine potentiometrische Reaktion ist.

## Revendications

1. Système pour détecter et communiquer une réponse d'un essai, comprenant:
un transpondeur (100) comprenant:
une antenne de réception (140) pour recevoir un signal HF;
un récepteur pour recevoir ledit signal HF à partir de l'antenne (140);
un émetteur pour émettre un signal HF à une antenne de transmission (145) pour transmettre le signal;
ladite antenne de réception et ladite antenne de transmission étant soit identiques, soit différentes, et
au moins ledit émetteur et ladite antenne de transmission étant disposés dans un boitier (135);
un essai (152, 154, 156, 158, 440); et
un capteur pour détecter une réponse d'un essai à un environnement dans lequel est disposé ledit transpondeur, par exemple un échantillon biologique liquide ou du sang,
**caractérisé en ce que**
ledit essai (152, 154, 156, 158, 440) est fixé sur une face du boitier (135) du transpondeur,
ledit transpondeur est un dispositif HF passif,
ledit système comprenant en outre une LED dirigeant de la lumière audit essai (152, 154, 156, 158, 440), et
ledit capteur comprend en outre une cellule photoélectrique (122, 124, 126, 128) détectant la lumière venant dudit essai (152, 154, 156, 158, 440).

2. Système selon la revendication 1, dans lequel ledit essai (152, 154, 156, 158, 440) est attaché à ladite face (105, 305) du transpondeur soit par collage, impression, moulage, sérigraphie ou par dépôt en phase vapeur.

3. Système selon la revendication 1, dans lequel l'énergie du transpondeur est obtenue dudit signal HF reçu à partir de ladite antenne ou d'un signal de lumière reçu par ladite cellule photoélectrique (122, 124, 126, 128).

4. Système selon la revendication 1, dans lequel ledit essai (152, 154, 156, 158, 440) comprend une séquence d'ADN bactérien qui s'attache sélectivement à une séquence d'ADN détectrice.

5. Système selon la revendication 4, comprenant en outre un conteneur d'échantillon (170) pour contenir ledit échantillon biologique liquide.

6. Système selon la revendication 5, dans lequel ledit environnement comprend en outre un milieu de croissance dans ledit conteneur d'échantillon (170).

7. Système selon la revendication 1, dans lequel ladite LED est externe audit transpondeur (100, 215, 500, 600).

8. Système selon la revendication 1, dans lequel ledit transpondeur (100, 215, 500, 600) comprend plusieurs essais (152, 154, 156, 158, 440) et plusieurs capteurs (232), un essai (152, 154, 156, 158, 440) respectif étant interrogé par un capteur (232) respectif pour détecter la réponse de l'essai.

9. Système selon la revendication 1, dans lequel ledit essai (152, 154, 156, 158, 440) est un colorant formé sur la face (105, 305) du transpondeur, ledit colorant changeant la couleur en réponse à pH de l'environnement dans lequel est placé ledit essai (152, 154, 156, 158, 440).

10. Système selon les revendications 1 ou 7, dans lequel ledit boitier (135) est optiquement transparent à la lumière émise par ladite LED et reçue par ladite cellule photoélectrique (122, 124, 126, 128).

11. Système selon la revendication 1, dans lequel ledit essai (152, 154, 156, 158, 440) est un essai diagnostique médical choisi dans le groupe formé par un essai biologique, un essai biochimique, un essai immunologique, un essai d'acide nucléique, un essai protéomique et un essai génomique.

12. Système selon la revendication 1, dans lequel la réponse de l'essai est choisie dans le groupe formé par une réponse fluorométrique, une réponse colorimétrique, une réponse luminescente, une réponse radiométrique, une réponse du type modèle statistique, une réponse ampérométrique, une réponse capacitive et une réponse potentiométrique.

13. Système selon la revendication 12, dans lequel ledit essai (152, 154, 156, 158, 440) est un essai électrochimique (630) comprenant une zone de capteur (650, 651) ayant une conductivité qui dépend de l'environnement dans lequel ledit transpondeur (105, 305) est placé, ledit capteur détectant un changement de la conductivité de ladite zone de capteur (650, 651).

14. Système selon la revendication 13, dans lequel ladite zone de capteur (650, 651) comprend une électrode (650, 651, 652) ayant une conductivité, qui change en réponse à l'environnement, et une électrode de référence.

15. Système selon la revendication 14, dans lequel ladite réponse de l'essai est une réponse potentiométrique.
